# EUROPEAN PATENT APPLICATION

(11) **EP 4 443 583 A1**
(43) Date of publication of application: **09.10.2024**
(21) Application number: 22901181.2
(22) Date of filing: 25.11.2022
(51) Int. Cl.: H01M 10/052, H01M 4/131, H01M 4/36, H01M 10/0567

(54) **NON-AQUEOUS ELECTROLYTE SECONDARY BATTERY**

(30) Priority: 30.11.2021 JP 2021193976
(71) Applicant: Panasonic Energy Co., Ltd., Osaka 570-8511 (JP)
(72) Inventor: TAKAI, Yasuyuki, Kadoma-shi, Osaka 571-0057 (JP)
(74) Representative: Novagraaf International SA
(86) International application number: PCT/JP2022/043460
(87) International publication number: WO 2023/100748

(57) **Abstract**

In a non-aqueous electrolyte secondary battery according to one embodiment of the present invention, a positive electrode (11) has: a positive electrode core material (30); and a positive electrode mixture layer (31) formed on the surface of the positive electrode core material (30). The electrode mixture layer (31) contains, as a positive electrode active material, first lithium metal composite oxide particles that are non-aggregated particles having a volume-based median diameter of 2-10 µm, and second lithium metal composite oxide particles that are secondary particles that have a volume-based median diameter of 10-30 µm and that are each obtained by aggregation of primary particles having an average particle diameter from 50 nm to 2 µm. The first lithium metal composite oxide particles are contained more in a first region (31a) than in a second region (31b). A non-aqueous electrolyte contains a diisocyanate compound.

## Description

### TECHNICAL FIELD

The present disclosure relates to a non-aqueous electrolyte secondary battery.

### BACKGROUND ART

With the spread of non-aqueous electrolyte secondary batteries for on-vehicle use and storage use in recent years, a non-aqueous electrolyte secondary battery having a high capacity and excellent cycle characteristics has been required. For example, Patent Literature 1 discloses a non-aqueous electrolyte secondary battery using single crystal particles being non-aggregated particles and secondary particles formed by aggregation of a plurality of primary particles as a positive electrode active material in order to improve cycle characteristics. Patent Literature 2 discloses a non-aqueous electrolyte secondary battery comprising an electrolyte including a lithium salt and a diisocyanate compound.

### CITATION LIST

### PATENT LITERATURE

PATENT LITERATURE 1: Japanese Unexamined Patent Application Publication No. 2020-53386
PATENT LITERATURE 2: Japanese Unexamined Patent Application Publication No. 2007-242411

### SUMMARY

However, according to intensive studies by the present inventors, it has been found that using the non-aggregated particles as the positive electrode active material improves the cycle characteristics but lowers the battery capacity due to decrease in a filling property of the positive electrode active material. Meanwhile, it has been found that using the secondary particles as the positive electrode active material deteriorates the cycle characteristics compared with using the non-aggregated particles. Furthermore, even when a mixture of the non-aggregated particles and the secondary particles is used, at least one of the high capacity and the good cycle characteristics cannot be achieved.

Although the addition of the diisocyanate compound contributes to improvement of the cycle characteristics, further improvement of the cycle characteristics has been demanded.

It is an advantage of the present disclosure to provide a non-aqueous electrolyte secondary battery having a high capacity and excellent cycle characteristics.

A non-aqueous electrolyte secondary battery of an aspect of the present disclosure is a non-aqueous electrolyte secondary battery comprising: a positive electrode; a negative electrode; and a non-aqueous electrolyte, wherein the positive electrode has a positive electrode core and a positive electrode mixture layer formed on a surface of the positive electrode core, the positive electrode mixture layer includes, as a positive electrode active material, first lithium-metal composite oxide particles being non-aggregated particles having a median diameter on a volumetric basis of greater than or equal to 2 µm and less than or equal to 10 µm, and second lithium-metal composite oxide particles being secondary particles formed by aggregation of primary particles having an average particle diameter of greater than or equal to 50 nm and less than or equal to 2 µm, the secondary particles having a median diameter on a volumetric basis of greater than or equal to 10 µm and less than or equal to 30 µm, when the positive electrode mixture layer is bisected in a thickness direction and is defined as a first region and a second region in this order from a surface side of the positive electrode, a content of the first lithium-metal composite oxide particles in the first region is higher than in the second region, and the non-aqueous electrolyte includes a diisocyanate compound.

According to an aspect of the present disclosure, a non-aqueous electrolyte secondary battery having a high capacity and excellent cycle characteristics can be provided.

### BRIEF DESCRIPTION OF DRAWINGS

FIG. 1 is a sectional view of a non-aqueous electrolyte secondary battery of an example of an embodiment.

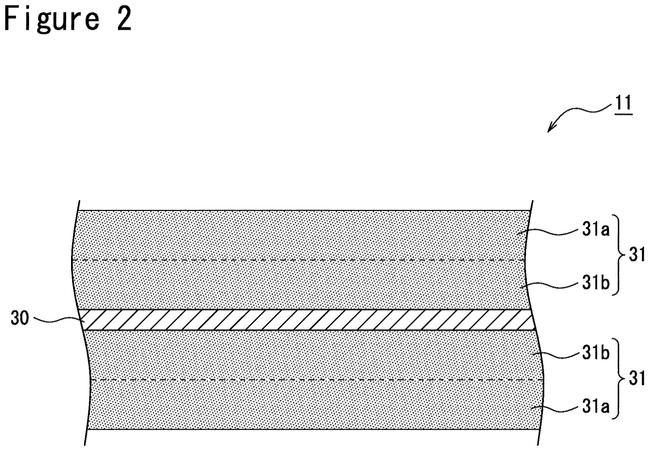

FIG. 2 is a sectional view of a positive electrode of an example of an embodiment.

### DESCRIPTION OF EMBODIMENTS

As described above, it is an important challenge to achieve both a high capacity and excellent cycle characteristics of a non-aqueous electrolyte secondary battery. The present inventors have made intensive investigation to solve this challenge, and have consequently found that the non-aqueous electrolyte secondary battery having a high capacity and excellent cycle characteristics can be obtained by using specific non-aggregated particles and specific secondary particles in combination as a positive electrode active material, setting a content of the non-aggregated particles on a surface side to be higher than that on a core side of the positive electrode mixture layer, and adding a diisocyanate compound into a non-aqueous electrolyte.

Although adding the diisocyanate compound contributes to improvement of the cycle characteristics, the improving effect is small by only adding the diisocyanate compound. Although setting the content of the non-aggregated particles on the surface of the positive electrode mixture layer to be high contributes to improvement of the cycle characteristics, the improving effect is small by only using the non-aggregated particles. As a result of investigation by the present inventors, it has been found that combination of the non-aggregated particles and the diisocyanate compound yields a synergistic effect far beyond an expected effect to specifically improve the cycle characteristics.

It is considered that the diisocyanate compound forms a protective coating on the negative electrode surface to improve the cycle characteristics, but adding the diisocyanate compound causes side reactions on the positive electrode to easily increase positive electrode resistance. However, setting the content of the non-aggregated particles on the surface side of the positive electrode mixture layer to be high can inhibit such an increase in the resistance due to the side reactions. That is, the negative electrode can be modified while inhibiting the defect due to addition of the diisocyanate compound. Therefore, the non-aqueous electrolyte secondary battery according to the present disclosure remarkably exhibits the effect of improving the cycle characteristics.

Using the non-aggregated particles singly as the positive electrode active material improves the cycle characteristics, but lowers the battery capacity due to decrease in a filling property of the positive electrode active material. Meanwhile, using the secondary particles are likely to cause particle cracking in a step of compressing the positive electrode, and space between the particles to be a pathway of an electrolyte liquid is blocked with the cracked particles. Thus, the filling density of the active material is increased, but the cycle characteristics deteriorate. Even when a mixture of the non-aggregated particles and the secondary particles are used, at least one of these characteristics cannot be achieved.

That is, when the content of non-aggregated particles in the positive electrode mixture layer is set to be "the first region on the surface side of the positive electrode mixture layer > the second region on the core side", and when the diisocyanate compound is added into the non-aqueous electrolyte, both of the high capacity and the excellent cycle characteristics are specifically achieved.

Hereinafter, an example of an embodiment of the non-aqueous electrolyte secondary battery according to the present disclosure will be described in detail with reference to the drawings. Selective combinations of a plurality of embodiments and modified examples, described below, are included in the present disclosure.

Hereinafter, a cylindrical battery in which a wound electrode assembly 14 is housed in a bottomed cylindrical exterior housing can 16 will be exemplified, but an exterior of the battery is not limited to a cylindrical exterior housing can, and may be, for example, a rectangular exterior housing can (rectangular battery) or an exterior composed of laminated sheets including a metal layer and a resin layer (laminate battery). The electrode assembly may be a laminated electrode assembly in which a plurality of positive electrodes and a plurality of negative electrodes are alternately stacked with a separator interposed therebetween.

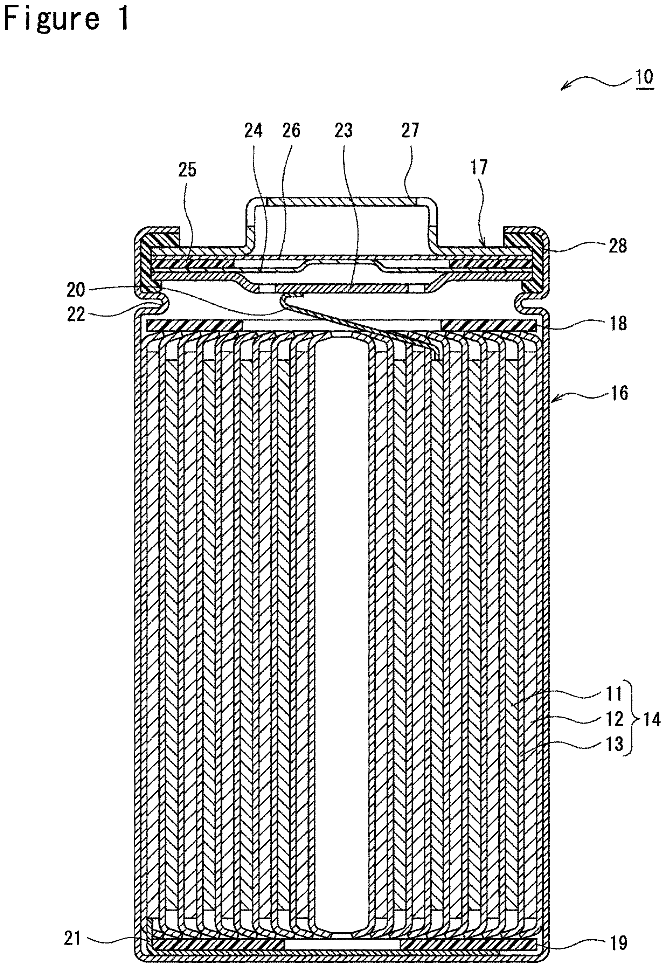

FIG. 1 is a view schematically illustrating a cross section of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening at one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

All of the positive electrode 11, negative electrode 12, and separator 13 that constitute the electrode assembly 14 have an elongated band-shape, and are spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than at least the positive electrode 11, and disposed to sandwich the positive electrode 11. The electrode assembly 14 has: a positive electrode lead 20 connected to the positive electrode 11 by welding or the like; and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole in the insulating plate 18 toward a side of the sealing assembly 17, and the negative electrode lead 21 extends along an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

As noted above, the exterior housing can 16 is a bottomed cylindrical metallic container having an opening at one side in an axial direction. A gasket 28 is provided between the exterior housing can 16 and the sealing assembly 17 to achieve sealability inside the battery and insulability between the exterior housing can 16 and the sealing assembly 17. On the exterior housing can 16, a grooved portion 22 in which part of a side wall thereof projects inside for supporting the sealing assembly 17 is formed. The grooved portion 22 is preferably formed in a circular shape along a circumferential direction of the exterior housing can 16, and supports the sealing assembly 17 with the upper surface thereof. The sealing assembly 17 is fixed on the upper part of the exterior housing can 16 with the grooved portion 22 and with an end of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at respective central parts thereof, and the insulating member 25 is interposed between the respective circumferential parts of the vent members 24 and 26. If the battery causes abnormality to increase the internal pressure, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through the cap 27 opening.

Hereinafter, the positive electrode 11, the negative electrode 12, the separator 13, and the non-aqueous electrolyte, which constitute the non-aqueous electrolyte secondary battery 10, particularly the positive electrode 11 and the non-aqueous electrolyte will be described in detail.

### [Positive Electrode]

The positive electrode 11 comprises a positive electrode core 30 and a positive electrode mixture layer 31 formed on a surface of the positive electrode core 30. For the positive electrode core 30, a foil of a metal stable within a potential range of the positive electrode 11, such as aluminum and an aluminum alloy, a film in which such a metal is disposed on a surface layer, and the like may be used. An example of the positive electrode core 30 is foil of aluminum or an aluminum alloy having a thickness of greater than or equal to 10 µm and less than or equal to 20 µm. The positive electrode mixture layer 31 includes the positive electrode active material, a conductive agent, and a binder, and preferably formed on both the surfaces of the positive electrode core 30. A thickness of the positive electrode mixture layer 31 is, for example, greater than or equal to 30 µm and less than or equal to 100 µm on one side of the positive electrode core 30. The positive electrode 11 may be produced by, for example, applying a positive electrode mixture slurry including the positive electrode active material, the conductive agent, the binder, and the like on the positive electrode core 30, and drying and then compressing the coating film to form the positive electrode mixture layers 31 on both the surfaces of the positive electrode core 30.

Examples of the conductive agent included in the positive electrode mixture layer 31 include carbon materials such as carbon black, acetylene black, Ketjenblack, graphite, carbon nanotube, carbon nanofiber, and graphene. A content of the conductive agent is, for example, greater than or equal to 0.01 parts by mass and less than or equal to 10 parts by mass, and preferably greater than or equal to 0.05 parts by mass and less than or equal to 5 parts by mass, based on 100 parts by mass of the positive electrode active material.

Examples of the binder included in the positive electrode mixture layer 31 include fluorine-containing resins such as polytetrafluoroethylene (PTFE) and polyvinylidene fluoride (PVdF), polyacrylonitrile (PAN), a polyimide, an acrylic resin, and a polyolefin. These resins may be used in combination with carboxymethylcellulose (CMC) or a salt thereof, polyethylene oxide (PEO), and the like. A content of the binder is, for example, greater than or equal to 0.1 parts by mass and less than or equal to 10 parts by mass, and preferably greater than or equal to 0.5 parts by mass and less than or equal to 5 parts by mass, based on 100 parts by mass of the positive electrode active material.

The positive electrode mixture layer 31 includes a particle lithium-metal composite oxide as the positive electrode active material. The lithium-metal composite oxide is a composite oxide containing metal elements such as Co, Mn, Ni, and Al, in addition to Li. The metal element constituting the lithium-metal composite oxide is, for example, at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi. Among them, at least one selected from the group consisting of Co, Ni, and Mn is preferably contained. An example of a preferable composite oxide is a lithium-metal composite oxide containing Ni, Co, and Mn, or a lithium-metal composite oxide containing Ni, Co, and Al.

The positive electrode mixture layer 31 includes two kinds of lithium-metal composite oxide particles. When the positive electrode mixture layer 31 is bisected in a thickness direction and is defined as a first region 31a and a second region 31b in this order from a surface side of the positive electrode 11, materials included in the first region 31a and the second region 3 1b are different from each other. In the present embodiment, the first region 31a and the second region 31b contain the different kinds of the lithium-metal composite oxide particles. Alternatively, when each region contains two kinds of the lithium-metal composite oxide particles, mass ratios thereof are different. On the other hand, kinds and contents of the conductive agent and the binder may be same as or different from the first region 31a and the second region 31b.

The positive electrode mixture layer 31 includes: first lithium-metal composite oxide particles being non-aggregated particles; and second lithium-metal composite oxide particles being secondary particles formed by aggregation of primary particles having an average particle diameter of greater than or equal to 50 nm and less than or equal to 2 µm. As the positive electrode active material, the positive electrode mixture layer 31 may contain only the first and second lithium-metal composite oxide particles, and may contain a third lithium-metal composite oxide particles within a range not impairing the object of the present disclosure. An example of the third lithium-metal composite oxide particles includes composite oxide particles not satisfying a condition of a particle diameter described later.

A median diameter on a volumetric basis (hereinafter, which may be referred to as "D50") of the first lithium-metal composite oxide particles is greater than or equal to 2 µm and less than or equal to 10 µm, and preferably greater than or equal to 3 µm and less than or equal to 8 µm. D50 of the second lithium-metal composite oxide particles is greater than or equal to 10 µm and less than or equal to 30 µm, and preferably greater than or equal to 12 µm and less than or equal to 20 µm. The D50 means a particle diameter at which a cumulative frequency is 50% from a smaller particle diameter side in a particle size distribution on a volumetric basis. The particle size distribution of the lithium-metal composite oxide particles may be measured by using a laser diffraction-type particle size distribution measuring device (for example, MT3000II, manufactured by MicrotracBEL Corp.) with water as a dispersion medium.

The first lithium-metal composite oxide particles, which are particles having no particle boundary inside thereof, are primary particles of a single crystal, for example. The crystallinity of the lithium-metal composite oxide particles may be confirmed by using a scanning ion microscope. Note that, the first composite oxide particles being non-aggregated particles may include less than or equal to five primary particles. The non-aggregated particles herein mean: particles composed of one primary particle having no particle boundary inside thereof; and particles composed of less than or equal to five primary particles.

The second lithium-metal composite oxide particles are secondary particles formed by aggregation of primary particles having an average particle diameter of greater than or equal to 50 nm and less than or equal to 2 µm, preferably greater than or equal to 500 nm and less than or equal to 2 µm. In the second lithium-metal composite oxide particles, there is a particle boundary of the primary particles. The primary particles may be confirmed by observing the second lithium-metal composite oxide particles with a scanning electron microscope (SEM). Note that, the plurality of the primary particles is adhered each other with strength so as not to be disintegrated by applying a strong force during, for example, crushing after synthesizing the second lithium-metal composite oxide particles and preparing the positive electrode mixture slurry.

The average particle diameter of the primary particles constituting the second lithium-metal composite oxide particles is determined by analyzing a SEM image of a particle cross section. For example, the positive electrode 11 is embedded in a resin, the cross section is produced by cross-section polisher (CP) processing, and this cross section is photographed with an SEM. From the SEM image, 30 primary particles are randomly selected to observe the particle boundary, and a diameter of a circumscribed circle of each of the 30 primary particles is determined to specify an average value thereof as the average particle diameter.

Each of the lithium- metal composite oxide particles may be synthesized by a method described in Example, described later. The first composite oxide particles may be synthesized by setting a pH of an alkaline aqueous solution used for synthesizing a precursor including Ni, Co, Mn, Al, and the like (metal composite hydroxide) to be higher than that in a case of synthesis of the second composite oxide particles, for example. Alternatively, the first composite oxide particles may be synthesized by setting a calcination temperature of the precursor to be higher instead of or in addition to setting the pH of the alkaline aqueous solution to be higher.

An example of a preferable pH of the alkaline aqueous solution for synthesizing the first composite oxide particles is greater than or equal to 10 and less than or equal to 11, and an example of a preferable calcination temperature is greater than or equal to 950°C and less than or equal to 1100°C. When the second composite oxide particles are synthesized, an alkaline aqueous solution having a pH of greater than or equal to 9 and less than or equal to 10 is used, and the calcination temperature is set to be less than or equal to 950°C, for example.

Each of the lithium-metal composite oxide particles is constituted of, for example, a lithium-metal composite oxide having a hexagonal crystalline structure belonging to the space group R-3m, and preferably constituted of LiNiₓCo_{y}Mn_{z}O₂ (0.3 < x < 0.6, x + y + z = 1) or LiNiₓCo_{y}Al_{z}O₂ (0.8 < x < 0.95, x + y + z = 1) as a main component. Here, the main component means a component at the largest mass among components constituting the lithium-metal composite oxide particles. Compositions of each of the lithium-metal composite oxide particles may be same as or different from each other.

Although the positive electrode mixture layer 31 contains the first and second lithium-metal composite oxide particles as the positive electrode active material, as described above, the positive electrode active materials included in the first region 31a and the second region 31b are different from each other. A content of the first lithium-metal composite oxide particles in the positive electrode mixture layer 31 is not uniform, and a content of the first lithium-metal composite oxide particles in the first region 31a is higher than in the second region 31b. It is considered that adding a large amount of the first lithium-metal composite oxide particles being the non-aggregated particles in the first region 31a forming the surface of the positive electrode mixture layer 31 can reduce a contact area with the electrolyte liquid, and the side reactions between the diisocyanate compound and the electrolyte liquid on the positive electrode 11 is inhibited.

The first lithium-metal composite oxide particles are less likely to undergo particle cracking than the second lithium-metal composite oxide particles during the step of manufacturing the positive electrode 11. Thus, a larger amount of the first lithium-metal composite oxide particles being present in the first region 31a of the positive electrode mixture layer 31 achieves a pathway of the electrolyte liquid in the first region 31a. In this case, it is considered that the electrolyte liquid has good permeability into the second region 31b to improve the cycle characteristics.

Contents of the positive electrode active material in the first region 31a and the second region 31b may be different, but preferably substantially the same. The content of the positive electrode active material is, for example, greater than or equal to 90 mass% and less than or equal to 99.9 mass%, and preferably greater than or equal to 95 mass% and less than or equal to 99 mass%, based on the mass of the positive electrode mixture layer 31. The content of the first lithium-metal composite oxide particles in the first region 31a is preferably greater than or equal to 50 mass% based on a mass of the positive electrode active material included in the first region 31a. In this case, the effect of improving the cycle characteristics becomes more remarkable.

The first region 31a may contain substantially only the first lithium-metal composite oxide particles as the positive electrode active material. For example, the first lithium-metal composite oxide particles may be contained only in the first region 31a and not in the second region 31b. When the first region 31a includes the second lithium-metal composite oxide particles, as for a mass ratio of each of the composite oxide particles in the first region 31a, the first lithium-metal composite oxide particles are preferably higher. That is, the content of the first lithium-metal composite oxide particles in the first region 31a is preferably higher than the content of the second lithium-metal composite oxide particles in the first region 31a. The content of the first lithium-metal composite oxide particles in the first region 31a is more preferably greater than or equal to 70 mass%, and particularly preferably greater than or equal to 80 mass% based on the mass of the positive electrode active material included in the first region 31a.

A content of the second lithium-metal composite oxide particles in the second region 31b is higher than in the first region 31a. The second lithium-metal composite oxide particles may be filled at a large amount per unit volume compared with the first lithium-metal composite oxide particles. Thus, using the second lithium-metal composite oxide particles may densify the positive electrode mixture layer 31. A larger amount of the second lithium-metal composite oxide particles being present in the second region 31b being on the positive electrode core 30 side, which has a small effect on the permeability of the electrolyte liquid, may maintain the good cycle characteristics and increase the capacity.

The second region 31b may contain substantially only the second lithium-metal composite oxide particles as the positive electrode active material. For example, the second lithium-metal composite oxide particles may be contained only in the second region 31b and not in the first region 31a. When the second region 31b includes the first lithium-metal composite oxide particles, a content of the second lithium-metal composite oxide particles in the second region 3 1b is preferably higher than a content of the first lithium-metal composite oxide particles in the second region 31b. The content of the second lithium-metal composite oxide particles in the second region 31b is preferably greater than or equal to 50 mass%, more preferably greater than or equal to 70 mass%, and particularly preferably greater than or equal to 80 mass% based on the mass of the positive electrode active material included in the second region 31b.

### [Negative Electrode]

The negative electrode 12 comprises a negative electrode core and a negative electrode mixture layer formed on a surface of the negative electrode core. For the negative electrode core, a foil of a metal stable within a potential range of the negative electrode 12, such as copper and a copper alloy, a film in which such a metal is disposed on a surface layer, and the like may be used. An example of the negative electrode core is foil of copper or copper alloy having a thickness of greater than or equal to 5 µm and less than or equal to 15 µm. The negative electrode mixture layer includes the negative electrode active material and a binder, and preferably formed on both the surfaces of the negative electrode core. A thickness of the negative electrode mixture layer is, for example, greater than or equal to 30 µm and less than or equal to 150 µm on one side of the negative electrode core. The negative electrode 12 may be produced by applying a negative electrode mixture slurry including the negative electrode active material, the binder, and the like on the negative electrode core, and drying and then compressing the coating film to form the negative electrode mixture layers on both the surfaces of the negative electrode core.

The negative electrode mixture layer includes, for example, a carbon-based active material to reversibly occlude and release lithium ions, as the negative electrode active material. A preferable carbon-based active material is a graphite such as: a natural graphite such as flake graphite, massive graphite, and amorphous graphite; or an artificial graphite such as massive artificial graphite (MAG) and graphitized mesophase-carbon microbead (MCMB). For the negative electrode active material, a Si-based active material composed of at least one of the group consisting of Si and a Si-containing compound may also be used, and the carbon-based active material and the Si-based active material may be used in combination.

For the binder included in the negative electrode mixture layer, fluorine-containing resins such as PTFE and PVdF, PAN, a polyimide, an acrylic resin, a polyolefin, styrene-butadiene rubber (SBR), and the like may be used. The negative electrode mixture layer may include CMC or a salt thereof, polyacrylic acid (PAA) or a salt thereof, polyvinyl alcohol (PVA), and the like. A content of the binder is, for example, greater than or equal to 0.1 parts by mass and less than or equal to 10 parts by mass, and preferably greater than or equal to 0.5 parts by mass and less than or equal to 5 parts by mass, based on 100 parts by mass of the negative electrode active material. With the negative electrode mixture layer, conductive agents such as carbon black, acetylene black, and Ketjenblack may be added.

### [Separator]

For the separator 13, a porous sheet having an ion permeation property and an insulation property is used. Specific examples of the porous sheet include a fine porous thin film, a woven fabric, and a nonwoven fabric. For a material of the separator, a polyolefin such as polyethylene, and polypropylene, cellulose, and the like are preferable. The separator 13 may have a single-layer structure or a multilayer structure. On a surface of the separator 13, a resin layer having high heat resistance, such as an aramid resin, may be formed.

On a boundary between the separator 13 and at least one selected from the positive electrode 11 and the negative electrode 12, a filler layer including an inorganic filler may be formed. Examples of the inorganic filler include oxides containing metal elements such as Ti, Al, Si, and Mg, and a phosphoric acid compound. The filler layer may be formed by applying a slurry containing the filler on the surface of the positive electrode 11, the negative electrode 12, or the separator 13.

### [Non-Aqueous Electrolyte]

The non-aqueous electrolyte includes a non-aqueous solvent and an electrolyte salt. For the non-aqueous solvent, esters, ethers, nitriles such as acetonitrile, amides such as dimethylformamide, a mixed solvent of two or more thereof, and the like may be used, for example. The non-aqueous solvent may contain a halogen-substituted derivative in which hydrogen of these solvents is at least partially substituted with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as γ-butyrolactone (GBL) and γ-valerolactone (GVL); and chain carboxylates such as methyl acetate, ethyl acetate, propyl acetate, methyl propionate (MP), and ethyl propionate. Among them, at least one selected from EC, EMC, and DMC is preferably used, and a mixed solvent of EC, EMC, and DMC is particularly preferably used.

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The non-aqueous electrolyte further includes a diisocyanate compound. The diisocyanate compound is dissolved in the non-aqueous solvent. It is considered that the diisocyanate compound is polymerized to form a protective coating on the negative electrode surface, and the cycle characteristics of the battery is improved. Although the diisocyanate compound causes side reactions on the positive electrode 11 to increase positive electrode resistance, in the present embodiment, a synergistic effect with the non-aggregated particles contained in the first region 31a of the positive electrode mixture layer 31 to specifically improve the cycle characteristics. Note that the non-aqueous electrolyte may include an additive such as vinylene carbonate (VC).

Specific examples of the diisocyanate compound include diisocyanatomethane, 1,3-diisocyanatopropane, 1,4-diisocyanatobutane, 1,5-diisocyanatopentane, 1,6-diisocyanatohexane (HDI), dicyclohexylmethane diisocyanate, 1,3-bisisocyanatomethylcyclohexane, 1,7-diisocyanatoheptane, 1,8-diisocyanatooctane, 1,9-diisocyanatononane, 1,10-diisocyanatodecane, 1,3-bis(isocyanatomethyl)cyclohexane, dicyclohexylmethane-1,1'-diisocyanate, dicyclohexylmethane-2,2'-diisocyanate, dicyclohexylmethane-3,3'-diisocyanate, dicyclohexylmethane-4,4'-diisocyanate, isophorone diisocyanate (IPDI), 1,6,11-triisocyanatoundecane, 4-isocyanatomethyl-1,8-octamethylene diisocyanate, diisocyanatobenzene, toluene diisocyanate (TDI), diphenylmethane diisocyanate (MDI), xylene diisocyanate (XDI), ethyldiisocyanatobenzene, trimethyldiisocyanatobenzene, diisocyanatonaphthalene, diisocyanatobiphenyl, 1,4-diisocyanato-2-butene, 1,5-diisocyanato-2-pentene, 1,5-diisocyanato-2-methylpentane, 1,6-diisocyanato-2-hexene, 1,6-diisocyanato-3-hexene, 1,3-bis(isocyanatomethyl)cyclohexane, carbonyl diisocyanate, 1,4-diisocyanatobutane-1,4-dione, and 1,5-diisocyanatopentane-1,5-dione.

The diisocyanate compound is preferably a compound represented by the general formula: O=C=N-R-N=C=O. In the formula, R represents an aliphatic hydrocarbon group having greater than or equal to 1 and less than or equal to 12 carbon atoms or an aromatic hydrocarbon group having greater than or equal to 6 and less than or equal to 20 carbon atoms. The aliphatic hydrocarbon group and the aromatic hydrocarbon group may include a hetero element. The number of carbon atoms in the aliphatic hydrocarbon group is more preferably greater than or equal to 3 and less than or equal to 10, and particularly preferably greater than or equal to 4 and less than or equal to 8. Specific examples of preferable diisocyanate compounds include 1,6-diisocyanatohexane (HDI). The diisocyanate compound may be used singly, or may be used in combination of two or more.

The diisocyanate compound contributes to improvement of the cycle characteristics even by addition at a small amount, but the content is preferably greater than or equal to 0.01 mass% and less than or equal to 3 mass% based on the mass of the non-aqueous electrolyte. The content of the diisocyanate compound may be greater than 3 mass%, but the upper limit is preferably 3 mass% from the viewpoint of inhibiting the positive electrode resistance. The content of the diisocyanate compound is more preferably greater than or equal to 0.02 mass% and less than or equal to 2 mass%, and particularly preferably greater than or equal to 0.03 mass% and less than or equal to 1 mass% based on the mass of the non-aqueous electrolyte.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1 < x < 6, and n represents 1 or 2), LiB₁₀Cl₁₀, LiCl, LiBr, LiI, lithium chloroborane, a lithium lower aliphatic carboxylate, borate salts such as Li₂B₄O₇ and Li(B(C₂O₄)F₂), and imide salts such as LiN(SO₂CF₃)₂ and LiN(C₁F₂ₗ₊₁SO₂)(CₘF₂ₘ₊₁SO₂) {l and m represent integers of greater than or equal to 0}. The lithium salts may be used singly, or a plurality of types thereof may be mixed to be used. Among them, LiPF₆ is preferable. A concentration of the lithium salt is, for example, greater than or equal to 0.8 mol and less than or equal to 4 mol per litter of the non-aqueous solvent.

### EXAMPLE

Hereinafter, the present disclosure will be described in more detail with Examples, but the present disclosure is not limited to these Examples.

### <Example 1>

### [Synthesis of First Lithium-Metal Composite Oxide Particles]

Nickel sulfate, cobalt sulfate, and manganese sulfate were mixed at predetermined proportions, and the mixture was uniformly mixed in an alkaline aqueous solution having a pH of greater than or equal to 10 and less than or equal to 11 to produce a precursor. Then, the precursor and lithium carbonate were mixed, the mixture was calcined at a temperature of 1000°C for 15 hours, and then crushed to obtain first lithium-metal composite oxide particles being non-aggregated particles. A composition and D50 of the particles were as follows.
Composition: LiNi_{0.5}Co_{0.2}Mn_{0.3}O₂
D50: 4.5 µm

### [Synthesis of Second Lithium-Metal Composite Oxide Particles]

Second lithium-metal composite oxide particles being secondary particles formed by aggregation of primary particles were obtained in the same manner as in the first lithium-metal composite oxide particles except that: the pH of the alkaline aqueous solution was changed to greater than or equal to 9 and less than or equal to 10; and the calcination temperature was changed to 900°C. A composition of the particles, an average particle diameter of the primary particles, and D50 of the secondary particles were as follows.
Composition: LiNi_{0.5}Co_{0.2}Mn_{0.3}O₂
Average particle diameter of primary particles: 1.6 µm
D50 of secondary particles (second lithium-metal composite oxide particles): 14.1 µm

### [Production of Positive Electrode]

The first lithium-metal composite oxide particles, acetylene black (AB), and polyvinylidene fluoride (PVdF) were mixed at a mass ratio of 98:1:1, and an appropriate amount of N-methyl-2-pyrrolidone (NMP) was added as a dispersion medium to prepare a first positive electrode mixture slurry having a solid-content concentration of 70 mass%. In addition, a second positive electrode mixture slurry was prepared in the same manner as the preparation of the first positive electrode mixture slurry except that the second lithium-metal composite oxide particles were used instead of the first lithium-metal composite oxide particles. Then, the second positive electrode mixture slurry was applied on both surfaces of a positive electrode core made of aluminum foil, subsequently the first positive electrode mixture slurry was applied on the coating film of the second positive electrode mixture slurry. The coating film was dried and compressed (linear pressure of 3000 N/m), and then cut to a predetermined electrode size to produce a positive electrode in which positive electrode mixture layers were formed on both surfaces of the positive electrode core. Amounts of the first positive electrode mixture slurry and the second positive electrode mixture slurry applied were the same.

### [Production of Negative Electrode]

As the negative electrode active material, a mixture of 95 parts by mass of a graphite powder and 5 parts by mass of a Si-containing compound represented by SiOₓ was used. Mixing 100 parts by mass of the negative electrode active material, 1 part by mass of sodium carboxymethylcellulose (CMC-Na), and water was performed, and 1.2 parts by mass of a styrene-butadiene rubber (SBR) dispersion was further mixed to prepare a negative electrode mixture slurry. Then, the negative electrode mixture slurry was applied on both surfaces of a negative electrode core made of copper foil. The coating film was dried and compressed, and then cut to a predetermined electrode size to produce a negative electrode in which negative electrode mixture layers were formed on both surfaces of the negative electrode core.

### [Preparation of Non-Aqueous Electrolyte Liquid]

Ethylene carbonate (EC), methyl ethyl carbonate (MEC), and dimethyl carbonate (DMC) were mixed at a volume ratio of 20:5:75 (25°C). Into this mixed solvent, LiPF₆ was dissolved so that the concentration was 1.4 mol/L, and vinylene carbonate (VC) and 1,6-diisocyanatohexane (HDI) were added. VC and HDI were added so that the concentrations were 3 mass% and 0.5 mass%, respectively.

### [Production of Battery]

Lead terminals were attached to each of the above positive electrode and the above negative electrode, and the positive electrode and the negative electrode were spirally wound with a separator interposed therebetween to produce a wound electrode assembly. The electrode assembly was housed in a bottomed cylindrical exterior housing can, the negative electrode lead was welded with a bottom inner surface of the exterior housing can, and the positive electrode lead was welded with an internal terminal plate of a sealing assembly. Thereafter, the above non-aqueous electrolyte was injected into the exterior housing can, an opening edge of the exterior housing can was caulked with the sealing assembly to produce a cylindrical secondary battery A1 having a battery capacity of 3400 mAh.

### <Comparative Example 1>

A non-aqueous electrolyte secondary battery B 1 was produced in the same manner as in Example 1 except that: in the production of the positive electrode, the second positive electrode mixture slurry was used instead of the first positive electrode mixture slurry (only the second positive electrode mixture slurry was used to form the positive electrode mixture layer); and in the preparation of the non-aqueous electrolyte liquid, HDI was not added.

### <Comparative Example 2>

A non-aqueous electrolyte secondary battery B2 was produced in the same manner as in Example 1 except that, in the production of the positive electrode, the second positive electrode mixture slurry was used instead of the first positive electrode mixture slurry.

### <Comparative Example 3>

A non-aqueous electrolyte secondary battery B3 was produced in the same manner as in Example 1 except that, in the preparation of the non-aqueous electrolyte liquid, HDI was not added.

### [Evaluation of Cycle Characteristics (Capacity Maintenance Rate)]

Under a temperature environment at 45°C, the battery of Examples and Comparative Examples was charged at a constant current of 990 mA (0.3 hour rate) until a battery voltage reached 4.2 V, and then charged at a constant voltage of 4.2 V with a terminal current of 66 mA. Thereafter, the battery was discharged at a constant current of 990 mA until the battery voltage reached 3 V. This charge and discharge were performed with 400 cycles, and a capacity maintenance rate was calculated by the following formula. Table 1 shows the evaluation results. Capacity Maintenance Rate = (Discharge Capacity at 400th Cycle / Discharge Capacity at 1st Cycle) × 100

**[Table 1]**

| | Positive electrode active material | | HDI | Capacity maintenance rate (%) |
|---|---|---|---|---|
| | First region | Second region | | |
| A1 | Non-aggregated particles | Secondary particles | 0.5% | 84.3 |
| B1 | Secondary particles | Secondary particles | - | 76.3 |
| B2 | Secondary particles | Secondary particles | 0.5% | 76.7 |
| B3 | Non-aggregated particles | Secondary particles | - | 82.5 |

As shown in Table 1, the battery A1 of Example 1 has a high capacity maintenance rate and excellent cycle characteristics. Meanwhile, the battery B1 of Comparative Example 1, which does not include the non-aggregated particles and the diisocyanate compound, has a considerably decreased capacity maintenance rate compared with the battery A1. The battery B2 of Comparative Example 2, in which the diisocyanate compound is added to the battery B1, also exhibits a small effect of improving the cycle characteristics and a low value of the capacity maintenance rate. The capacity maintenance rate of the battery B3 of Comparative Example 3, which includes the non-aggregated particles and does not include the diisocyanate compound, is remarkably improved compared with the capacity maintenance rates of the batteries B1 and B2, but is not comparable to the capacity maintenance rate of the battery A1. According to the battery A1 of Example 1, use of the non-aggregated particles and the secondary particles in combination can increase the filling density of the positive electrode active material to increase the capacity of the battery.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 31a First region, 31b Second region

## Claims

1. A non-aqueous electrolyte secondary battery, comprising:
a positive electrode;
a negative electrode; and
a non-aqueous electrolyte, wherein
the positive electrode has a positive electrode core and a positive electrode mixture layer formed on a surface of the positive electrode core,
the positive electrode mixture layer includes, as a positive electrode active material, first lithium-metal composite oxide particles being non-aggregated particles having a median diameter on a volumetric basis of greater than or equal to 2 µm and less than or equal to 10 µm, and second lithium-metal composite oxide particles being secondary particles formed by aggregation of primary particles having an average particle diameter of greater than or equal to 50 nm and less than or equal to 2 µm, the secondary particles having a median diameter on a volumetric basis of greater than or equal to 10 µm and less than or equal to 30 µm,
when the positive electrode mixture layer is bisected in a thickness direction and is defined as a first region and a second region in this order from a surface side of the positive electrode, a content of the first lithium-metal composite oxide particles in the first region is higher than in the second region, and
the non-aqueous electrolyte includes a diisocyanate compound.

2. The non-aqueous electrolyte secondary battery according to claim 1, wherein the diisocyanate compound is a compound represented by the general formula: O=C=N-R-N=C=O, wherein R represents an aliphatic hydrocarbon group having greater than or equal to 1 and less than or equal to 12 carbon atoms or an aromatic hydrocarbon group having greater than or equal to 6 and less than or equal to 20 carbon atoms.

3. The non-aqueous electrolyte secondary battery according to claim 1 or 2, wherein a content of the diisocyanate compound is greater than or equal to 0.01 mass% and less than or equal to 3 mass% based on a mass of the non-aqueous electrolyte.

4. The non-aqueous electrolyte secondary battery according to any one of claims 1 to 3, wherein the content of the first lithium-metal composite oxide particles in the first region is greater than or equal to 50 mass% based on a mass of the positive electrode active material included in the first region.
